# EUROPEAN PATENT APPLICATION

(11) **EP 4 443 540 A1**
(43) Date of publication of application: **09.10.2024**
(21) Application number: 22901573.0
(22) Date of filing: 20.10.2022
(51) Int. Cl.: H01M 4/134, H01M 4/40, H01M 4/38, H01M 4/36, H01M 4/1395, H01M 4/04, H01M 10/052, H01M 4/02

(54) **LITHIUM METAL ELECTRODE, METHOD OF PREPARING SAME, AND LITHIUM SECONDARY BATTERY INCLUDING SAME**

(30) Priority: 02.12.2021 KR 20210170522
(71) Applicant: RESEARCH INSTITUTE OF INDUSTRIAL SCIENCE & TECHNOLOGY, Pohang-si, Gyeongsangbuk-do 37673 (KR)
(72) Inventor: BAE, Hongyoul, Pohang-si, Gyeongsangbuk-do 37673 (KR); KIM, Jin Hong, Pohang-si, Gyeongsangbuk-do 37660 (KR); BAE, Weon Soo, Pohang-si, Gyeongsangbuk-do 37677 (KR); LEE, Sang Lag, Pohang-si, Gyeongsangbuk-do 37639 (KR); KIM, Eun Kyung, Seoul 07648 (KR)
(74) Representative: Maiwald GmbH
(86) International application number: PCT/KR2022/016078
(87) International publication number: WO 2023/101214

(57) **Abstract**

The present exemplary embodiments relate to a lithium metal electrode, a method of manufacturing the same, and a lithium secondary battery including the same.

According to an exemplary embodiment, a lithium metal electrode including: a current collector and a metal layer which is disposed on at least one surface of the current collector and includes a lithium component, in which a protective layer including amorphous carbon and lithium-ion conduction promoting ceramic particles is formed on a surface of the metal layer, may be provided.

## Description

### [Technical Field]

The present exemplary embodiments relate to a lithium metal electrode, a method of manufacturing the same, and a lithium secondary battery including the same.

### [Background Art]

Recently, due to the explosive demand and request for increased mileage of electric vehicles, development of a secondary battery having a high capacity and high energy density for meeting the requirements is actively in progress worldwide.

For lower costs and high energy density improvements, it is suggested to use a lithium metal electrode as a negative electrode of a lithium secondary battery.

In order to form the lithium metal negative electrode, a method of rolling a lithium foil on a current collector is generally used. However, in the case of the rolling, it is difficult to implement a lithium metal negative electrode having a thickness of 20 µm or less.

Meanwhile, in order to implement a secondary battery having high energy density substantially using a lithium metal negative electrode, a thin lithium metal negative electrode film having a thickness of 10 to 20 µm is needed.

However, in the case in which a lithium metal is used as a negative electrode in an all-solid-state battery, high resistance is produced by a reaction between lithium and an all-solid-state electrolyte, and lithium dendrites are continuously produced or high-resistant lithium by-products are produced due to local non-uniformity in current density during a charging/discharging process, thereby causing failure or deteriorating capacity due to short circuit or overvoltage during charging/discharging.

In order to solve the problems as such, various methods such as forming a protective coating layer or forming a lithium alloy layer on a lithium metal are being suggested for the purpose of preventing a reaction with the all-solid-state battery and preventing precipitation growth of lithium dendrites, but sufficient life characteristics for use in electric vehicles have yet to be obtained.

In order to satisfy the demands, recently, in Korean Patent Laid-Open Publications Nos. 10-2018-0136041, 10-2019-0134804, and 10-2020-7006820, Nature Energy 5, 299 2020, and the like, the above problems were intended to be solved by using a negative electrode-free coating layer in which amorphous carbon and silver (Ag) nanoparticles are mixed to precipitate lithium in the charge/discharge process.

However, a material having electron conductivity such as a lithium-based alloy or a lithium-containing compound is produced in the inside or the interface of the negative electrode-free coating layer during the charge/discharge process to cause current concentration and lithium dendrites, thereby shortening life.

In addition, initial coulomb efficiency is low due to an irreversible reaction problem by amorphous carbon which is the main material of the negative electrode-free coating layer.

In order to solve the problem, a sacrificial positive electrode is used, and also a large amount of noble metal nanoparticles is used, which greatly reduces prices competitiveness and makes commercialization difficult.

Therefore, development of technology to manufacture an electrode having excellent initial efficiency and excellent charge/discharge characteristics is required.

### [Disclosure]

### [Technical Problem]

The present disclosure attempts to solve the problems, such as lithium dendrite formation and a life decrease due to an electron conductive material in a negative electrode layer, initial coulomb efficiency deterioration due to initial irreversibility by amorphous carbon in a negative electrode-free coating layer and use of a sacrificial positive electrode for compensating this, and use of a large amount of noble nanoparticles such as silver (Ag) in order to produce an alloy with lithium during the charging/discharging process, as described above.

The present disclosure also attempts to provide a lithium metal electrode capable of preventing dendrite formation by a protective layer included in an electrode layer and having excellent charge/discharge characteristics, a method of manufacturing the same, and a lithium secondary battery including the same.

### [Technical Solution]

An exemplary embodiment of the present disclosure provides a lithium metal electrode including: a current collector, a metal layer which is disposed on at least one surface of the current collector and includes a lithium alloy, and a protective layer disposed on the metal layer, wherein the protective layer includes amorphous carbon and lithium-ion conduction promoting ceramic particles.

### [Advantageous Effects]

According to the present exemplary embodiment, since a lithium-ion conduction promoting protective layer is formed in a lithium metal electrode, lithium dendrite formation during the charging/discharging process of a lithium secondary battery to which the electrode is applied may be controlled, and a decrease in lithium secondary battery life may be alleviated.

In addition, a decline in initial coulomb efficiency of a lithium secondary battery may be controlled, and charging/discharging characteristics may be significantly improved.

### [Description of the Drawings]

FIG. 1 schematically shows a lithium metal electrode manufactured according to an exemplary embodiment.
FIG. 2 schematically shows a lithium metal electrode according to another exemplary embodiment.
FIG. 3 schematically shows a process of manufacturing the lithium metal electrode according to an exemplary embodiment.
FIG. 4 is an SEM photograph showing a cross-section of a current collector on which an alloy material coating layer is formed during a process of manufacturing the lithium metal electrode according to Example 1.
FIG. 5 is an SEM photograph showing a cross-section of a current collector on which an alloy material coating layer and a lithium-ion conduction promoting protective layer are formed during a process of manufacturing the lithium metal electrode according to Example 1.
FIGS. 6A, 6B, 6C, and 6D are SEM photographs showing cross-sections of lithium metal electrodes manufactured according to Example 1 and Comparative Examples 1 to 3.
FIGS. 7A, 7B, 8A, 8B, 9A, 9B, 10A, and 10B are photographs showing surface microstructures and component analysis results of the lithium metal electrodes manufactured according to Example 1 and Comparative Examples 1 to 3.
FIG. 11 is a drawing showing results of evaluating initial effects of secondary batteries manufactured according to Example 1 and Comparative Examples 1 to 3.
FIG. 12 is a drawing showing results of evaluating charge/discharge life of the secondary batteries manufactured according to Example 1 and Comparative Examples 1 to 3.
FIG. 13 is a drawing showing results of evaluating charge/discharge life of the secondary batteries manufactured according to Examples 1 to 4 and Comparative Example 2.
FIG. 14 is a schematic diagram of a secondary battery to which the lithium metal electrode manufactured according to the present disclosure is applied.

### [Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, exemplary embodiments of the present disclosure will be described in detail. However, these are suggested only as an example and the present disclosure is not limited thereby, and the present disclosure is only defined by the scope of the claims described later.

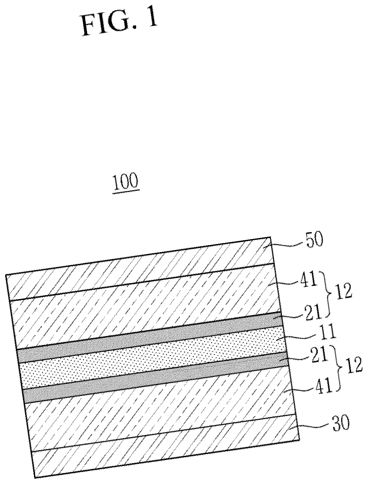

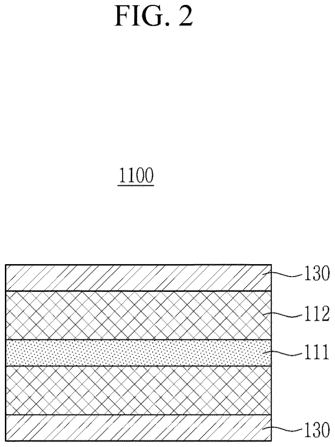

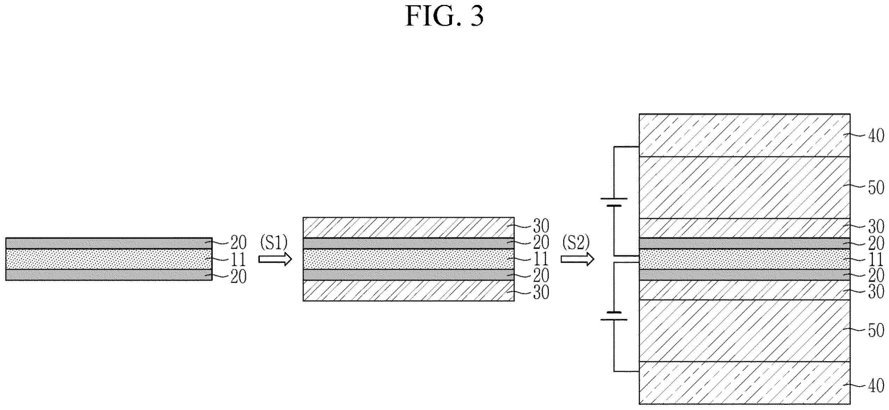

FIG. 1 schematically shows a lithium metal electrode manufactured according to an exemplary embodiment, FIG. 2 schematically shows a lithium metal electrode according to another exemplary embodiment, and FIG. 3 schematically shows a process of manufacturing the lithium metal electrode for a secondary battery according to an exemplary embodiment.

Referring to FIG. 1, a lithium metal electrode 100 according to an exemplary embodiment includes a current collector 11, a metal layer 12 disposed on at least one surface of the current collector 11, and also, a protective layer 30 disposed on the other surface of the metal layer 12 facing the current collector 11.

The current collector 11 is for an electrical connection in a lithium secondary battery.

The current collector 11 may have a foil form, but is not limited thereto, and for example, may be in the form of mesh, foam, rod, wire, and a sheet made of woven wire (fiber).

The material of the current collector 11 may have electrical conductivity and limited reactivity with lithium. The material of the current collector 11 may be, for example, any one or a combination thereof of copper, nickel, titanium, stainless steel, gold, platinum, silver, tantalum, ruthenium, alloys thereof, carbon, conductive polymer, and a composite fiber in which a nonconductive polymer is coated with a conductive layer.

When the current collector 11 is thick, a battery weight is increased so that energy density is lowered, and when the current collector 11 is thin, there is a risk of overheating damage during high current operation and the current collector may be damaged by tension during a battery manufacturing process. Therefore, the current collector 11 may have a thickness in a range of 1 µm to 50 µm.

The metal layer 12 includes a lithium alloy layer 21 which is disposed on the current collector 11 and includes a lithium alloy and a lithium metal layer 41 disposed on the lithium alloy layer 21. Herein, the lithium alloy layer 21 may be a layer including a lithium alloy in which lithium-friendly component included in a coating layer of the current collector 11 by applying current between the current collector 11 and a lithium source and lithium precipitated from the lithium source are alloyed. In order to increase an electrodeposition speed during metal layer formation, in the case in which high current is applied to proceed with an electrodeposition process, lithium secondary battery performance deteriorates. However, in the case in which the metal layer 12 is formed into a structure including the lithium alloy layer 21 including a lithium component as in the present exemplary embodiment, even when an electrodeposition process is performed by applying high current, production of an excessive amount of fine lithium particles or destruction of a film which is a surface protective layer of a lithium metal layer which is already produced in the electrodeposition process may be prevented.

More specifically, since the metal layer 12 of the present exemplary embodiment includes a lithium alloy layer including a lithium component, in the case in which a lithium metal layer is formed on the lithium alloy layer by applying high current in the electrodeposition process, initially produced lithium particles are induced to grow well, so that particles having a coarse structure are formed, and also the lithium metal layer, which results in the metal layer 12 may have a uniform surface.

Therefore, the performance, specifically the charge/discharge characteristics of a secondary battery to which the lithium metal electrode according to the present exemplary embodiment is applied may be significantly improved. In addition, even in the case of applying high current to perform the electrodeposition process at a high speed, the lithium metal electrode for a secondary battery having high performance may be manufactured, and thus, the productivity of the lithium metal electrode for a secondary battery may be significantly improved.

The lithium alloy layer 21 may be an alloy formed of lithium and a lithium-friendly metal, in which the lithium-friendly metal may be one or more selected from the group consisting of In, Ag, Sn, Zn, Si, Al, and Bi, but is not limited thereto.

In the present exemplary embodiment, the lithium alloy layer includes a lithium-friendly metal. In the case in which the lithium alloy layer includes the lithium-friendly metal as such, a lithium-friendly metal having high electron conductivity is included, and thus, electrons are supplied well from the current collector to reduce lithium ions, thereby performing electrodeposition of the lithium metal layer easily.

Meanwhile, the metal layer serves to help lithium to be precipitated under the protective layer more effectively during a charging process of the battery.

The metal layer 12 may have a thickness in a range of of 1 µm to 100 µm, more specifically 5 µm to 30 µm.

When the metal layer 12 is too thick, in the case in which the lithium metal electrode of the present exemplary embodiment is applied to a secondary battery, the weight and volume of a battery are increased to lower energy density. In addition, since the time and costs of the electrodeposition process increase in proportion to the thickness during formation of the metal layer 12, it is preferred that the metal layer 12 has a thickness of 100 µm or less.

In addition, when the metal layer 12 is too thin, in the case of applying the lithium metal electrode of the present exemplary embodiment to a secondary battery, the charge/discharge life of the battery is decreased. Specifically, during the charging/discharging of the battery, lithium in the battery is gradually consumed due to a side reaction between an electrolyte solution and lithium included in the negative electrode active material layer, that is, the metal layer of the present disclosure, and the like, so that a battery capacity is decreased. However, when the metal layer 12 is thin, a lithium retention amount to replenish lithium consumed during charging and discharging is decreased, which decreases charge/discharge life of a battery. Therefore, it is preferred that the metal layer 12 has a thickness of 1 µm or more.

The protective layer 30 is disposed on the metal layer 12 and includes amorphous carbon and lithium-ion conduction promoting ceramic particles.

In the case in which a lithium metal is used as a negative electrode in an all-solid-state battery, high resistance is produced by a reaction between lithium and an all-solid-state electrolyte, and lithium dendrites are continuously produced or high-resistant lithium by-products are produced due to local non-uniformity in current density during a charging/discharging process, thereby causing failure or deteriorating capacity due to short circuit or overvoltage during charging/discharging.

However, the protective layer including amorphous carbon and lithium-ion conduction promoting ceramic particles as in the present exemplary embodiment may improve output characteristics and life characteristics of the lithium metal electrode, and further, structural safety.

More specifically, since the lithium metal electrode of the present exemplary embodiment includes the protective layer 30 including amorphous carbon and lithium-ion conduction promoting ceramic particles, movement of lithium ions on an electrode surface may be promoted during charging/discharging, and production of an electron conductive material on an interface may be suppressed. In addition, it may serve to lower electron conductivity inside the protective layer 30.

Therefore, the performance of a secondary battery to which the lithium metal electrode according to the present exemplary embodiment is applied, specifically, the output characteristics and life characteristics of the battery may be significantly improved.

The amorphous carbon may be one or more selected from the group consisting of acetylene black, super P black, carbon black, Denka Black, activated carbon, graphite, hard carbon, and soft carbon, but is not limited thereto.

In addition, the lithium-ion conduction promoting ceramic particles may be one or more selected from the group consisting of particles which promote lithium-ion conductivity and suppress electron conductivity, such as, representatively, Li₂TiO₃, LiNbO₃, LiTaO₃, LiZrO₃, Li₄Ti₅O₁₂, Li₂CO₃, Li₃BO₃, and SrTiOs, but is not limited thereto. The lithium-ion conductive ceramic particles allow lithium to move to the lower portion of the protective layer well by promoting conduction of lithium ions and suppressing conduction of electrons in the inside and the interface of the protective layer during the charging process of the battery using the lithium negative electrode.

In the present exemplary embodiment, the lithium-ion conduction promoting ceramic particles may have an average particle size D(50) in a range of 100 nm to 1,000 nm. In the case in which the lithium-ion conduction promoting ceramic particles have an average particle size D(50) of less than 100 nm, a distribution of ceramic particles in the coating layer may be non-uniform due to agglomeration between primary particles, and when they have D(50) of larger than 1,000 nm, huge particles serve as a resistance layer to lower lithium-ion conductivity.

In addition, particularly, since the material as such does not react well with a sulfide-based electrolyte material of an all-solid-state battery and has excellent chemical stability, it is favorable for improving interface stability and charge/discharge life of the all-solid-state battery. The ion conduction promoting protective layer may be applied after preparing the composite into a slurry form, and in order to prepare the slurry, a binder may be further included.

The lithium-ion conduction promoting protective layer may include the amorphous carbon and the lithium-ion conduction promoting ceramic particles at a weight ratio of 99.5:0.5 to 40:60. Specifically, it may include at a weight ratio of 98.5:1.5 to 50:50, and more specifically 97:3 to 70:30.

When the lithium-ion conduction promoting ceramic particles are mixed too little, the lithium-ion conduction promoting effect by mixing with the lithium-ion conduction promoting ceramic particles may not be sufficiently obtained, when the lithium-ion conduction promoting ceramic particles are mixed too much, connection between ceramic particles is not good at room temperature, so that compactness of the protective layer is poor, and thus, lithium-ion conduction may also be rather hindered, and when the ceramic particles having higher density than amorphous carbon are contained in excessive, electrical energy density may be decreased.

Meanwhile, the protective layer of the present exemplary embodiment may include a binder.

Herein, the binder may be a water-based binder, and the water-based binder may be one or more selected from the group consisting of rubber-based binders selected from the group consisting of an acrylonitrile-butadiene rubber, a styrene-butadiene rubber (SBR), and an acryl rubber, and polymer resins such as hydroxyethyl cellulose, carboxymethyl cellulose, and polyvinylidene fluoride, but is not limited thereto.

Herein, the binder may be added at 1 to 15 parts by weight, more specifically 3 to 10 parts by weight, based on the weight of the slurry formed by mixing the lithium-ion conduction promoting ceramic particles, the amorphous carbon, and water.

When the amount of the binder added satisfies the above range, particles forming the protective layer are efficiently bound together without causing a decrease in electrical energy density due to an increase in weight and volume, thereby forming the protective layer having excellent performance, and thus, the life characteristics of a secondary battery may be further increased. When the amount of the binder added is mixed too little, a binding force between particles decreases in forming the protective layer, and when the amount of the binder added is mixed too much, energy density is decreased and the resistance of the protective layer is greatly increased, which hinders lithium-ion conduction.

The protective layer including the amorphous carbon, the lithium-ion conduction promoting ceramic particles, and the binder may have a thickness in a range of 0.01 µm to 50 µm, more specifically 1 µm to 20 µm. In the case in which the thickness of the protective layer satisfies the range, formation of lithium dendrites on the surface of the protective layer due to the effect obtained by including the amorphous carbon and the lithium-ion conduction promoting ceramic particles is prevented, and conduction is performed by good penetration inside of the lithium ion protective layer, so that lithium may be precipitated under the protective layer. However, in the case in which the protective layer including the amorphous carbon and the lithium-ion conduction promoting ceramic particles is too thin, it may not serve as the protective layer. Meanwhile, when the protective layer is too thick, resistance of the protective layer is excessively high, so that overvoltage during operation of a secondary battery may be increased, and also, energy density may be decreased due to an increase in weight and volume. However, the thickness of the protective layer may be variably adjusted depending on the design of a secondary battery structure.

Meanwhile, though not shown, the metal layer 12 of the present exemplary embodiment may further include a solid-electrolyte Interphase (SEI) disposed on the surface of the metal layer 12.

The solid-electrolyte Interphase is formed by a reaction between a lithium metal of an electrodeposited lithium source and a plating solution, and the like, during a manufacturing process of the metal layer 12, and the thickness, composition, and characteristics of the film may be controlled by adjusting the composition of the plating solution used and the conditions of the electrodeposition process.

The solid-electrolyte Interphase may have a thickness in a range of, for example, 2 nm to 2 µm, more specifically 10 nm to 500 nm.

When the solid-electrolyte Interphase disposed on the surface of the metal layer 12 is too thick, lithium-ion conductivity is lowered and interfacial resistance is increased, and thus, charge/discharge characteristics when applied to a battery may be deteriorated. In addition, when the solid-electrolyte Interphase is too thin, the solid-electrolyte Interphase may be easily lost during a process of applying the lithium metal electrode according to an exemplary embodiment to a battery.

Therefore, it is preferred that the solid-electrolyte Interphase is uniformly and densely formed all over the surface of the metal layer 12, at a small thickness, in a range satisfying the thickness range.

Herein, the solid-electrolyte Interphase may include one or more materials selected from the group consisting of a Li-N-C-H-O-based ionic compound, a Li-P-C-H-O-based ionic compound, LiF, and LisN.

FIG. 2 schematically shows the lithium metal electrode according to another exemplary embodiment.

Referring to FIG. 2, the lithium metal electrode for a secondary battery 100 according to another exemplary embodiment includes a current collector 11 and a metal layer 12 which is disposed on at least one surface of the current collector 11 and formed of a mixture of lithium and a lithium alloy. Herein, the lithium alloy may be formed by applying current between the current collector 11 and the lithium source to alloy the lithium-friendly component included in the coating layer formed on the current collector 11 and lithium precipitated from the lithium source.

Herein, the metal layer 12 may include a lithium-friendly metal. Herein, the lithium-friendly metal may be, for example, one or more selected from the group consisting of In, Ag, Sn, Zn, Si, Al, and Bi, but is not limited thereto.

In the present exemplary embodiment, the metal layer 12 is in the form of including the lithium-friendly metal. In the case of forming the metal layer 12 including the lithium-friendly metal, nucleation free energy may be lowered at the beginning of nucleation in the electrodeposition process, and thus, a lithium metal layer having a coarse particle structure even under high current and overvoltage conditions may be formed.

In the present exemplary embodiment, the metal layer 12 may have a thickness in a range of 1 µm to 100 µm, and more specifically, 5 µm to 30 µm. In the present exemplary embodiment, when metal layer 12 satisfies the thickness range, the energy density of a battery may be maximized while improving the charge/discharge life of the battery, and the time and costs of the electrodeposition process during formation of the metal layer 12 may be minimized. In the case in which the metal layer is too thin, initial coulomb efficiency is decreased by initial irreversibility and surplus lithium is insufficient, and thus, charge/discharge performance is deteriorated. However, in the case in which the metal layer is too thick, the energy density of the battery is decreased, and the process time when forming the metal layer and the amount of metal raw material used are increased.

Meanwhile, though not shown in FIG. 2, the metal layer of the present exemplary embodiment may further include a solid-electrolyte Interphase disposed on the surface of the metal layer.

Since the solid-electrolyte Interphase is as described above for the lithium metal electrode for a secondary battery according to an exemplary embodiment, the description will be omitted herein.

A method of manufacturing a lithium metal electrode according to an exemplary embodiment includes: forming a coating layer on at least one surface of a current collector using a coating composition including a lithium-friendly component; forming a protective layer on a surface of the coating layer using a slurry including amorphous carbon and lithium-ion conduction promoting ceramic particles; disposing the current collector on which the coating layer and the protective layer are formed in a plating solution, and then disposing a lithium source at a predetermined distance from the protective layer; and forming a metal layer including a lithium alloy in which the lithium-friendly component included in the coating layer and lithium precipitated from the lithium source are alloyed by applying current between the current collector and the lithium source.

In the forming of a protective layer on a surface of the coating layer using a slurry including the amorphous carbon and the lithium-ion conduction promoting ceramic particles, the lithium-ion conduction promoting protective layer may include the amorphous carbon and the lithium-ion conduction promoting ceramic particles at a weight ratio of 99.5:0.5 to 40:60. Specifically, they may be included at 98.5:1.5 to 50:50, and more specifically at 97:3 to 70:30.

First, forming an alloy material coating layer on at least one surface of a current collector using a coating composition including a lithium-friendly metal is performed.

Herein, the lithium-friendly metal may be, for example, one or more selected from the group consisting of In, Ag, Sn, Zn, Si, Al, and Bi, but is not limited thereto.

In addition, the alloy material coating layer may be performed, for example, by using at least one method of electrolytic and electroless plating, sputtering, electron beam, and thermal vapor deposition.

Meanwhile, in the forming of an alloy material coating layer, the alloy material coating layer formed on at least one surface of the current collector may have a thickness in a range of 0.001 µm to 10 µm, specifically 0.01 µm to 1 µm, and more specifically 100 nm to 500 nm.

When the alloy material coating layer is too thin, it is insufficient to serve to form an alloy with lithium, and when it is too thick, it takes a lot of money and time to form the alloy material coating layer, and thus, production efficiency and economic feasibility are decreased and the weight and mass of the battery are increased to lower energy density.

After the forming of an alloy material coating layer, applying a protective layer on a surface of the alloy material coating layer formed above is performed.

Herein, the protective layer may be a lithium-ion conduction promoting protective layer, and may include amorphous carbon and lithium-ion conduction promoting ceramic particles.

Herein, the amorphous carbon may be one or more selected from the group consisting of acetylene black, super P black, carbon black, Denka Black, activated carbon, graphite, hard carbon, and soft carbon, but is not limited thereto.

In addition, the lithium-ion conduction promoting ceramic particles may be one or more selected from the group consisting of particles having low electron conductivity and high lithium-ion conductivity such as Li₂TiO₃, LiNbOs, LiTaOs, LiZrOs, Li₄Ti₅O₁₂, Li₂CO₃, LisBOs, and SrTiOs, but is not limited thereto.

Meanwhile, herein, a binder may be added to the lithium-ion conduction promoting protective layer.

The binder may be a water-based binder, and the water-based binder may be one or more selected from the group consisting of rubber-based binders selected from the group consisting of an acrylonitrile-butadiene rubber, a styrene-butadiene rubber (SBR), and an acryl rubber, and polymer resins such as hydroxy ethyl cellulose, carboxymethyl cellulose, and polyvinylidene fluoride, but is not limited thereto.

The lithium-ion conduction promoting protective layer may be obtained by applying a slurry formed by mixing the amorphous carbon, the lithium-ion conduction promoting ceramic particles, and the binder with water, using at least one method of doctor blade, dipping, reverse roll, direct roll, gravure, extrusion, and brush application.

Herein, the lithium-ion conduction promoting protective layer may include the amorphous carbon and the lithium-ion conduction promoting ceramic particles at a weight ratio of 99.5:0.5, specifically 98.5:1.5 to 50:50, and more specifically 97:3 to 70:30.

In addition, the binder may be added at 0.5 to 10 parts by weight based on a combined weight of the lithium-ion conduction promoting ceramic particle, the amorphous carbon, and water.

Meanwhile, in the forming of a lithium-ion conduction promoting protective layer, the lithium-ion conduction promoting protective layer formed on the surface of the alloy material coating layer may have a thickness in a range of 0.01 µm to 50 µm, more specifically 1 µm to 20 µm range.

When the thicknesses of the alloy material coating layer and the lithium-ion conduction promoting protective layer satisfy the above range, the structure of the lithium metal electrode for a secondary battery according to an exemplary embodiment, more specifically the lithium metal electrode as shown in FIG. 1 or 2 is formed.

After the forming of a lithium-ion conduction promoting protective layer, disposing the current collector on which the coating layer and the lithium-ion conduction promoting protective layer are sequentially formed in a plating solution, and then disposing a lithium source at a predetermined distance from the current collector; and forming a metal layer by applying current between the current collector and the lithium source are performed.

Referring to FIG. 3, the forming of a metal layer will be described in more detail.

First, the current collector 11 on which the alloy material coating layer 20 and the lithium-ion conduction promoting protective layer 30 are formed is disposed in the plating solution 50, and then the lithium source 40 is disposed a predetermined distance from the lithium-ion conduction promoting protective layer 30.

The lithium source 40 may use, for example, a lithium metal, a lithium alloy, a foil in which the lithium metal or lithium alloy is pressed on a current collector, a plating solution in which a lithium salt is dissolved, and the like.

Since the current collector 11 is as described above, the description will be omitted therein.

The plating solution 50 may be prepared by dissolving a lithium salt in a nonaqueous solvent.

More specifically, the lithium salt may be LiCl, LiBr, Lil, LiCO₃, LiNO₃, LiFSI, LiTFSI, LiBF₄, LiPF₆, LiAsF₆, LiClO₄, LiN (SO₂CF₃)₂, LiBOB, or a combination thereof. The concentration of the lithium salt may be 0.1 to 3.0 M based on the total electrolyte solution.

More specifically, in the present exemplary embodiment, the plating solution is characterized by including a nitrogen-based compound as at least one of the lithium salt and the nonaqueous solvent.

The nitrogen-based compound may include, for example, one or more selected from the group consisting of lithium nitrate, lithium bis fluorosulfonyl imide, lithium bis trifluoromethane sulfonimide, caprolactam (e-caprolactam), methyl caprolactam (N-methyl-e-caprolactam), triethylamine, and tributylamine.

Among the nitrogen-based compounds, at least one of lithium nitrate, lithium bis fluorosulfonyl imide, and lithium bis trifluoromethane sulfonimide may be used as the lithium salt.

Among the nitrogen-based compounds, at least one of caprolactam (e-caprolactam), methyl caprolactam (N-methyl-e-caprolactam), triethylamine, and tributylamine may be used as a nonaqueous solvent.

Meanwhile, the plating solution may further include a common nonaqueous solvent as a solvent, considering the viscosity and the like of the plating solution. It is because when the viscosity of the plating solution is too high, mobility of lithium ions is decreased to lower the ion conductivity of the plating solution, and thus, a time required for the electrodeposition process is increased to decrease productivity.

The solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In the forming a lithium metal layer on at least one surface of the current collector by applying current, the current density of the current may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In addition, a time to apply the current may be in a range of 0.05 to 50 hours, more specifically 0.25 hours to 25 hours.

As such, in the present exemplary embodiment, a lithium metal electrode in which a metal layer including a lithium metal layer having a coarse particle structure is formed by preventing production of excessive fine lithium particles even under high current conditions and inducing initially produced lithium particles to grow well may be manufactured. In addition, the metal layer manufactured as such also has excellent surface uniformity. Therefore, specifically, a lithium metal electrode structure provided with the metal layer 12 including the lithium alloy layer 21 including a lithium component and the lithium metal layer 41 disposed on the lithium alloy layer 21 as shown in FIG. 1, or a lithium metal electrode structure provided with the metal layer 12 in which lithium and a lithium alloy are mixed as shown in FIG. 2 may be manufactured. The metal layer 12 may have a thickness in a range of 1 µm to 100 µm, more specifically 5 µm to 30 µm.

When the lithium metal electrode manufactured according to the present exemplary embodiment is applied, the charge/discharge characteristics of a secondary battery may be significantly improved.

The secondary battery according to an exemplary embodiment includes a positive electrode, a negative electrode, and an electrolyte disposed between the positive electrode and the negative electrode. Herein, the negative electrode may be the lithium metal electrode according to the present disclosure.

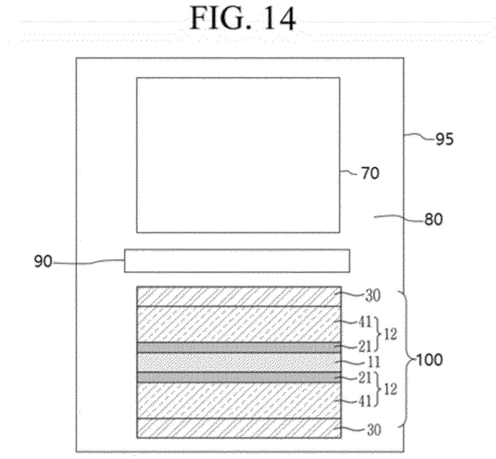

FIG. 14 shows the structure of the secondary battery according to an exemplary embodiment.

Referring to FIG. 14, the secondary battery 200 of the present exemplary embodiment may include an electrode assembly including a positive electrode 70, a negative electrode 100, and a separator 90 disposed between the positive electrode 70 and the negative electrode 100.

The electrode assembly is wound and folded and accommodated in a battery case 95.

Thereafter, an electrolyte 80 may be injected into the battery case 95 and sealed to complete the secondary battery 200. Herein, the battery case 95 may have a cylindrical, angular, pouch, coin shapes, or the like.

FIG. 14 shows the negative electrode according to an exemplary embodiment as the negative electrode 100, but the lithium metal electrode for secondary batteries according to the exemplary embodiments described above may be applied as the negative electrode.

The positive electrode 70 may include a positive electrode active material layer and a positive electrode current collector.

The positive electrode active material layer may include, for example, a Li compound including at least one metal of Ni, Co, Mn, Al, Cr, Fe, Mg, Sr, V, La, and Ce and at least one non-metal element selected from the group consisting of O, F, S, P, and combinations thereof. The positive electrode active material layer may include active material particles having an average particle size of about 0.01 µm to 200 µm, and may be appropriately selected depending on the required characteristics of the battery.

If necessary, a conductive material may be added to the positive electrode active material layer.

The conductive material may be, for example, carbon black, fine carbon such as ultrafine graphite particles and acetylene black, nanometal particle paste, and the like, but is not limited thereto.

The positive electrode current collector serves to support the positive electrode active material layer. The positive electrode current collector may use an aluminum thin plate (foil), a nickel thin plate, or a combination thereof, but is not limited thereto.

As the electrolyte 80 filled into the lithium secondary battery 200, a nonaqueous electrolyte solution or a solid electrolyte may be used.

The nonaqueous electrolyte solution may include, for example, a lithium salt such as lithium hexafluorophosphate and lithium perchlorate, and a solvent such as ethylene carbonate, propylene carbonate, and butylene carbonate. In addition, the solid electrolyte may use, for example, a gel polymer electrolyte in which an electrolyte solution is impregnated in a polymer electrolyte such as polyethylene oxide and polyacrylonitrile, or an inorganic solid electrolyte such as LiI and Li₃N.

The separator 90 separates the positive electrode and the negative electrode, and provides a migration channel of lithium ions, and may be any separator as long as it is commonly used in the lithium secondary battery. That is, a separator having low resistance to ion migration of the electrolyte and excellent moisture containing ability may be used. Herein, the separator may be selected from, for example, glass fiber, polyester, polyethylene, polypropylene, polytetrafluoroethylene, or combinations thereof, and may be in a non-woven fabric or woven fabric form. Meanwhile, in the case in which a solid electrolyte is used as the electrolyte 80, the solid electrolyte may be also used as the separator 90.

### DETAILED DESCRIPTION OF THE EMBODIMENTS

Hereinafter, exemplary embodiments of the present disclosure will be described in detail. However, these are suggested only as an example and the present disclosure is not limited thereby, and the present disclosure is only defined by the scope of the claims described later.

### Example 1

The lithium metal electrode for a secondary battery according to Example 1 was manufactured by the process shown in FIG. 1.

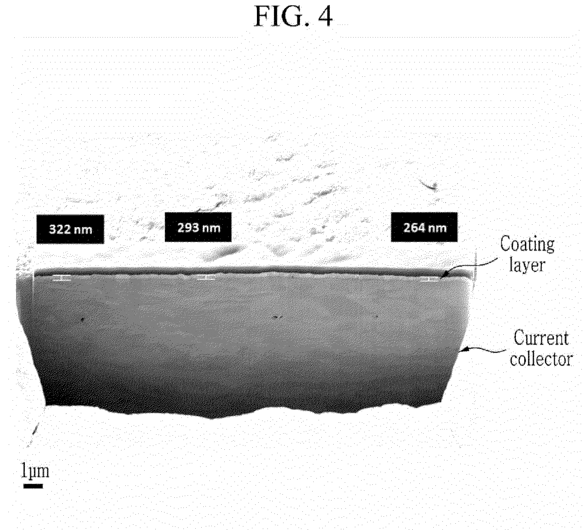

First, a coating layer 20 including silver (Ag) was formed at a thickness of about 300 nm on one surface of a copper current collector 11, using an electroless plating method (see FIG. 4).

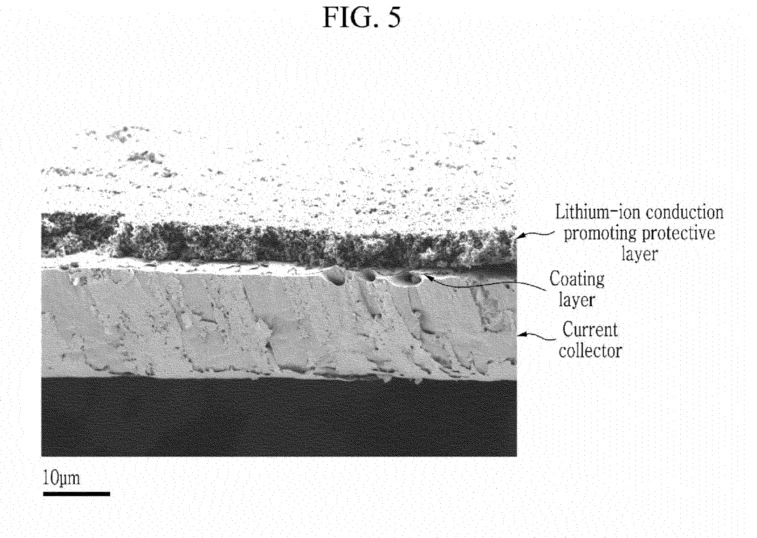

Next, a protective layer 30 was formed at a thickness of about 5 µm by a slurry coating using a comma coater on the surface of the coating layer 20, specifically, a lithium-ion conduction promoting protective layer was formed (see FIG. 5).

Herein, the protective layer 30 in which a weight ratio of amorphous carbon using acetylene black and lithium-ion conduction promoting ceramic particles using lithium titanium oxide (Li₂TiO₃) was 7:3 was mixed with a solvent using water. At this time, carboxymethyl cellulose and a styrene-butadiene rubber binder were added at 1.5 wt% each based on the weight of a mixture including the acetylene black, the titanium lithium oxide (Li₂TiO₃), and water, thereby preparing a slurry.

The current collector 11 on which the coating layer 20 and the protective layer 30 were formed was disposed in the plating solution 50, and then a lithium source 40 was disposed at a predetermined distance from the protective layer 30.

The plating solution 50 was prepared by adding 40 wt% of lithium bis(fluorosulfonyl)imide and 10 wt% of lithium nitrate which are nitrogen-based compounds, based on 100 wt% of the plating solution to 1,2-dimethoxyethane solvent, and adding 10 wt% of fluoroethylene carbonate which is a fluorine-based compound based on 100 wt% of the plating solution.

In addition, as a lithium source 40, a lithium metal plate having a purity of 99.9% or more and a thickness of 500 µm was pressed on a copper collector plate (Cu plate) and used.

The lithium source 40 and the current collector 11 were laminated in an electrically insulated state in the plating solution 50, and lithium was precipitated between the current collector 11 and the lithium-ion conduction promoting protective layer 30 by applying current with the lithium source 40 and the current collector 11 as (+) and (-) electrodes, respectively, using a power supply device, thereby forming a metal layer.

At this time, the average current density of the process of 4 mA/cm², and the process time of about 15 minutes were used to manufacture a lithium metal electrode on which the metal layer having a thickness of about 5 µm was formed, that is, a negative electrode.

### Examples 2, 3, and 4, and Reference Example 1

Negative electrodes were manufactured in the same manner as in Example 1, except that during the manufacture of the protective layer, the weight ratio between the amorphous carbon and the lithium-ion conduction promoting ceramic particles was adjusted as in the following Table 3.

### Comparative Example 1

A negative electrode was manufactured in the same manner as in Example 1, except that the coating layer was not formed on one surface of the current collector, the protective layer was formed using 100% amorphous carbon, and the metal layer was not formed between the current collector and the protective layer.

### Comparative Example 2

A negative electrode was manufactured in the same manner as in Example 1, except that the protective layer was formed using 100% amorphous carbon.

### Comparative Example 3

A negative electrode was manufactured in the same manner as in Example 1, except that the coating layer was not formed on one surface of the current collector, and the metal layer was not formed between the current collector and the protective layer.

### (Experimental Example 1)

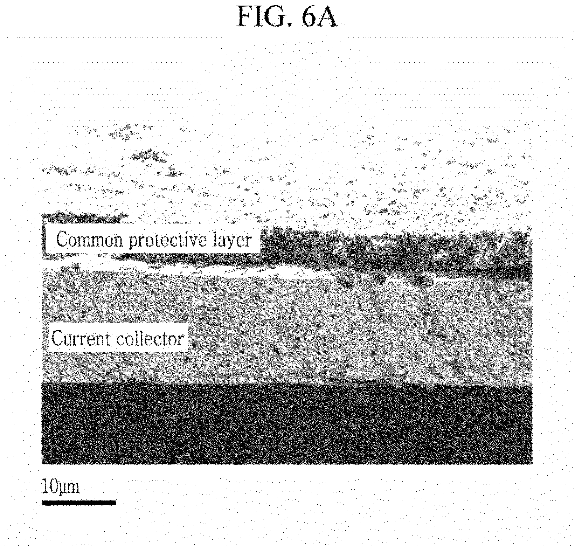

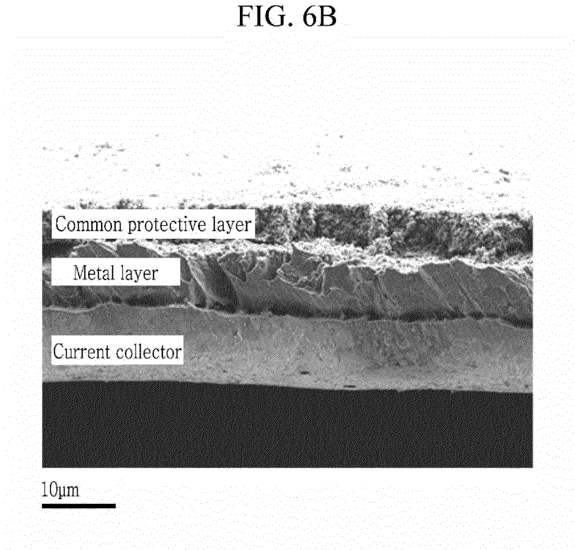

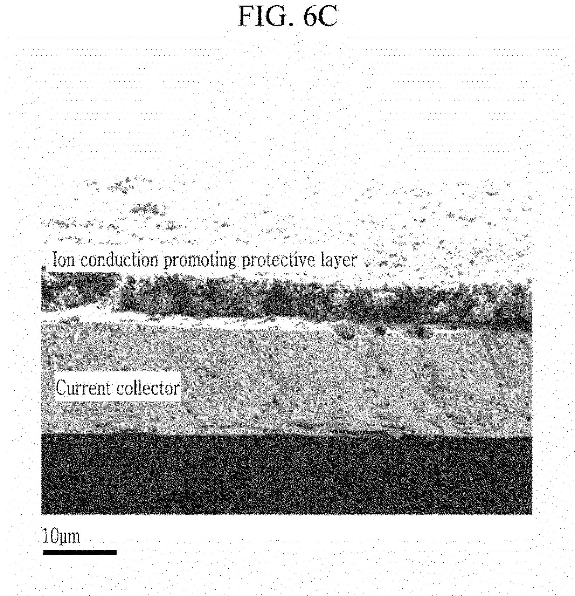

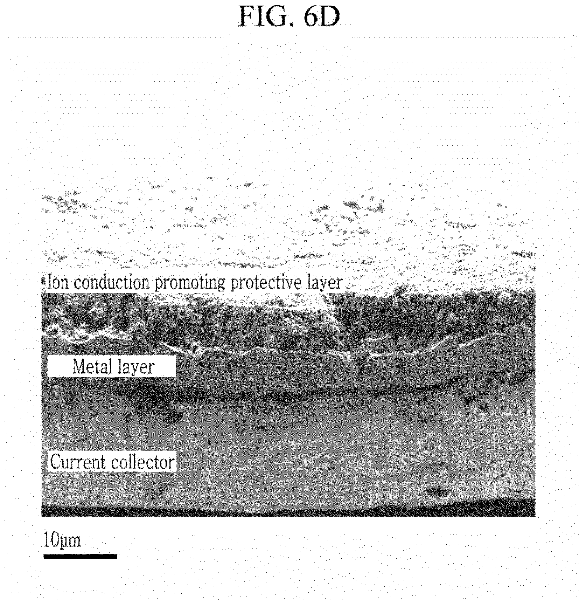

The cross-sectional structures of the negative electrodes manufactured according to Example 1 and Comparative Examples 1, 2, and 3 were analyzed and are shown in FIGS. 6A, 6B, 6C, and 6D, respectively.

That is, FIGS 6A, 6B, 6C, and 6D are photographs in which the cross-section of the negative electrodes manufactured according to Example 1 and Comparative Examples 1, 2, and 3 were analyzed using a scanning electron microscope (SEM).

Referring to FIGS. 6B and 6D, it was confirmed that the negative electrodes manufactured according to Example 1 and Comparative Example 2 had the metal layer uniformly formed between the protective layer and the current collector.

### (Experimental Example 2)

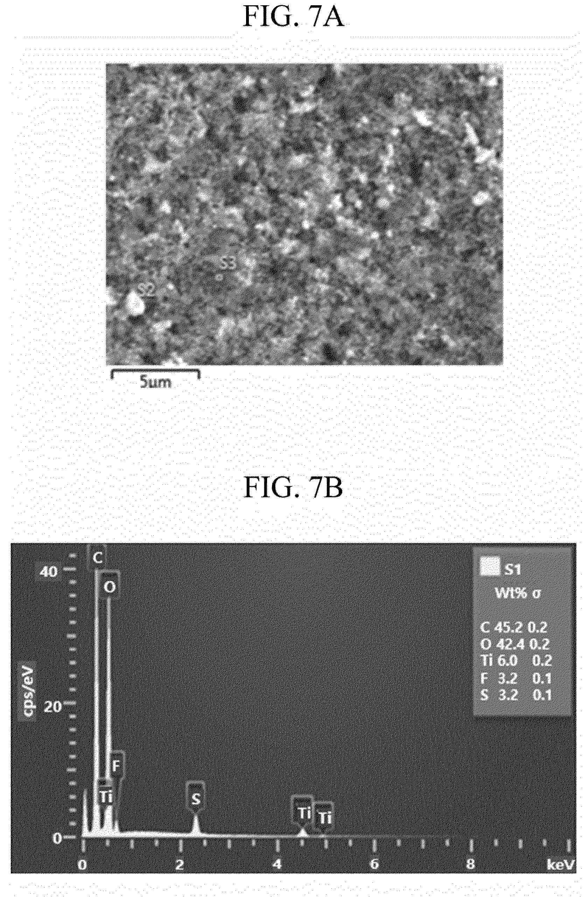

The surface microstructures of the negative electrodes manufactured according to Example 1 and Comparative Examples 1, 2, and 3 are shown in FIGS. 7A, 8A, 9A, and 10A, respectively, and the components on the surface of the negative electrode manufactured according to Example 1 and Comparative Examples 1, 2, and 3 were analyzed and are shown in FIGS. 7B, 8B, 9B, and 10B.

The surface microstructure of the negative electrode was analyzed using a scanning electron microscope (SEM), and the components on the surface of the negative electrode were analyzed using energy dispersive X-ray spectroscopy.

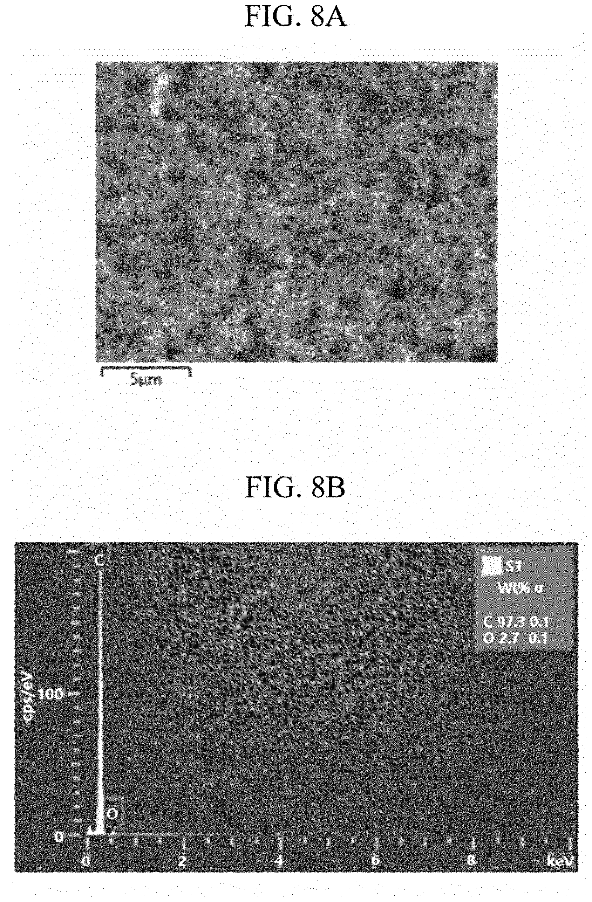

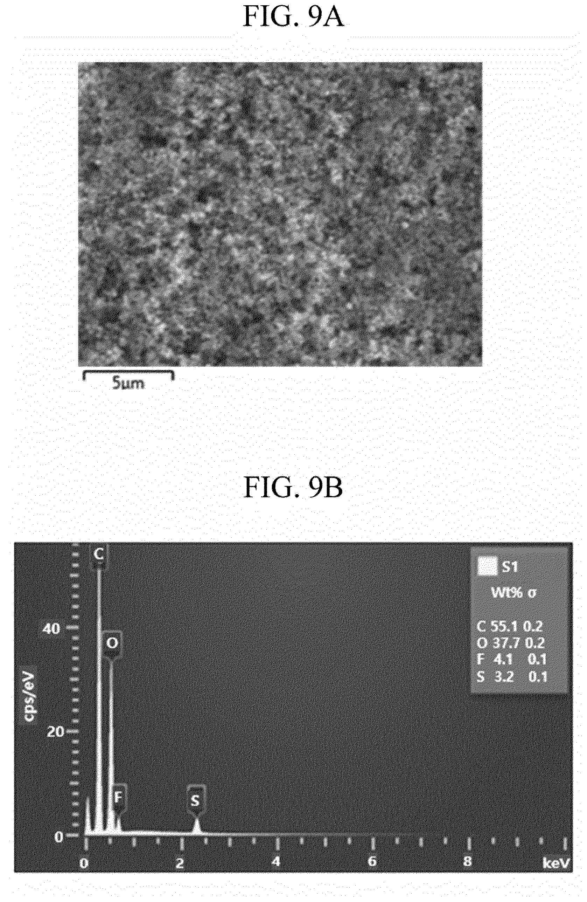

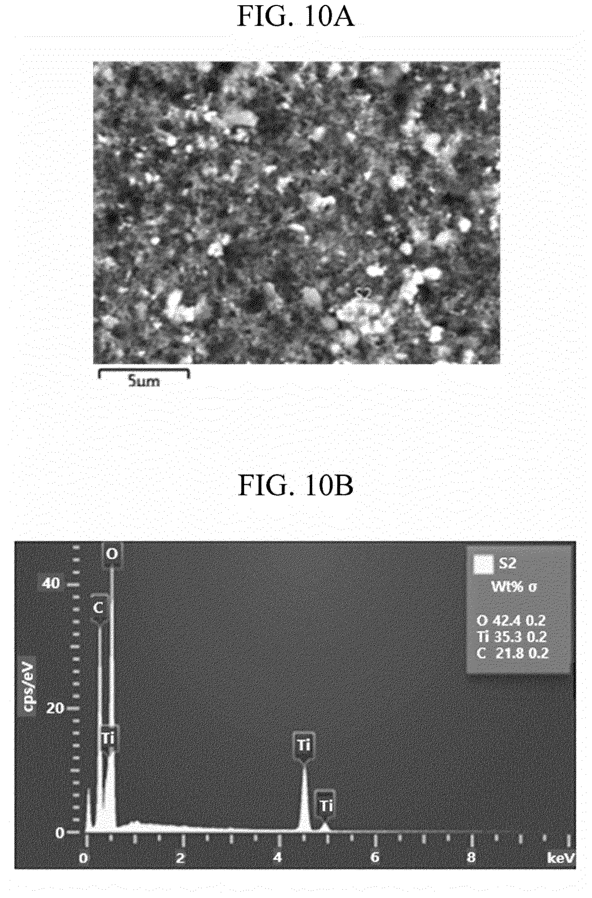

Upon comparison of FIGS. 7A, 7B, 10A, and 10B with FIGS. 8A, 8B, 9A, and 9B, it was confirmed that a titanium (Ti) element was observed on the surface of the negative electrode manufactured according to Example 1 and Comparative Example 3 including lithium-ion conduction promoting ceramic particles. The reason is considered as being that titanium lithium oxide (Li₂TiO₃) was used as the lithium-ion conduction promoting ceramic particles. Meanwhile, fluorine (F) and sulfur (S) were further observed on the surface of the negative electrodes manufactured according to Example 1 and Comparative Example 2 to which the electrodeposition plating process was applied. This is considered as being due to the solid-electrolyte Interphase (SEI) produced by the decomposition reaction of the plating solution in the electrodeposition process. Thus, it was confirmed that the solid-electrolyte Interphase including a Li-N-C-H-O-based ionic compound and an ion conductive material such as LiF formed by a fluorine-based compound included in the plating solution were included on the surface of the negative electrode.

### (Experimental Example 3)

All-solid-state batteries were manufactured as in FIG. 14 using the negative electrodes, that is, the lithium metal electrode manufactured according to Example 1 and Comparative Examples 1, 2, and 3, and then initial coulomb efficiency was evaluated.

For evaluation of the initial coulomb efficiency of the all-solid-state battery cell, a pressurized dedicated evaluation cell which may maintain inert atmosphere was used.

Specifically, sulfide-based argyrodite (Li₆PS₅Cl) was used as the solid electrolyte. The solid electrolyte was manufactured into a pellet form having a thickness of 0.7 mm, and pressurized to a pressure of 370 MPa to improve density.

Lithium having a thickness of 0.5 mm was disposed on one surface of the solid electrolyte, and the negative electrodes manufactured according to Example 1 and Comparative Examples 1, 2, and 3 were disposed on the other surface. Herein, pressurization to a pressure of 50 MPa was performed to attach the positive electrode and the negative electrode according to the present disclosure to the solid electrolyte.

During the initial coulomb efficiency evaluation, a pressure of 16 MPa was applied to the dedicated evaluation cell.

Herein, the initial coulomb efficiency was calculated by charging with a constant current of 1 mA/cm² for 3 hours to charge a total of 3 mAh/cm³, and then discharging with a constant current of 1 mA/cm² and finishing discharge at the point at which the discharge voltage exceeded 1 V to measure the discharge capacity.

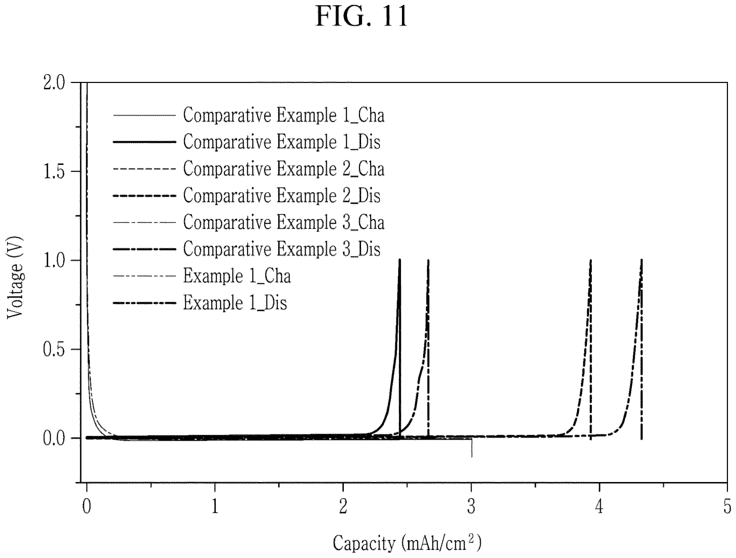

The results of evaluating the initial coulomb efficiency of the secondary battery are shown in FIG. 11 and the following Table 1.

**(Table 1)**

| Classification | Charge amount (mAh/cm²) | Discharge amount (mAh/cm²) | Initial coulomb efficiency (%) |
|---|---|---|---|
| Example 1 | 3 | 4.15 | 138.2 |
| Comparative Example 1 | 3 | 2.44 | 81.3 |
| Comparative Example 2 | 3 | 3.93 | 131.0 |
| Comparative Example 3 | 3 | 2.77 | 92.3 |

Referring to FIGS. 8A, 8B, 10A, and 10B, and Table 1, the all-solid-state batteries to which the negative electrodes manufactured according to Comparative Examples 1 and 3 in which the metal layer was not formed between the current collector and the protective layer were applied showed low initial coulomb efficiency of 81.3% and 92.3%, respectively. Thus, it was confirmed that a significant amount of lithium was consumed by an initial irreversible reaction during the charging process, and this is considered as being mainly due to the irreversible reaction by the amorphous carbon in the protective layer.

However, the secondary batteries to which the negative electrodes manufactured according to Example 1 and Comparative Example 2 on which the metal layer was formed between the current collector and the protective layer by the electrodeposition plating process were applied showed a high initial coulomb effect of 131.0% and 138.2%, respectively. This is considered as being that an initial discharge capacity was higher than the charge capacity due to lithium included in the metal layer and surplus lithium in the lithium alloy.

Therefore, it was confirmed that when the negative electrode on which the metal layer was formed in the same manner as in the present exemplary embodiment was manufactured, a discharge capacity decrease due to initial irreversibility did not occur.

### (Experimental Example 4)

### (Experimental Example 4-1)

The all-solid-state batteries were manufactured as in FIG. 14, using the negative electrodes, that is, the lithium metal electrodes manufactured according to Example 1 and Comparative Examples 1, 2, and 3, and then the charge/discharge characteristics were evaluated.

The all-solid-state battery cell used in the charge/discharge evaluation was the pressurized dedicated evaluation cell used in Experimental Example 3.

Charge/discharge performance evaluation was performed as follows.

One cycle was defined as charging with a constant current of 1 mA/cm² for 1 hour and then discharging with a constant current of 1 mA/cm² for 1 hour.

In addition, charge/discharge life was defined as ending when a short circuit occurred between the positive electrode and the negative electrode manufactured according to the present disclosure during the charging/discharging process or a voltage between both electrodes exceeded 2 V.

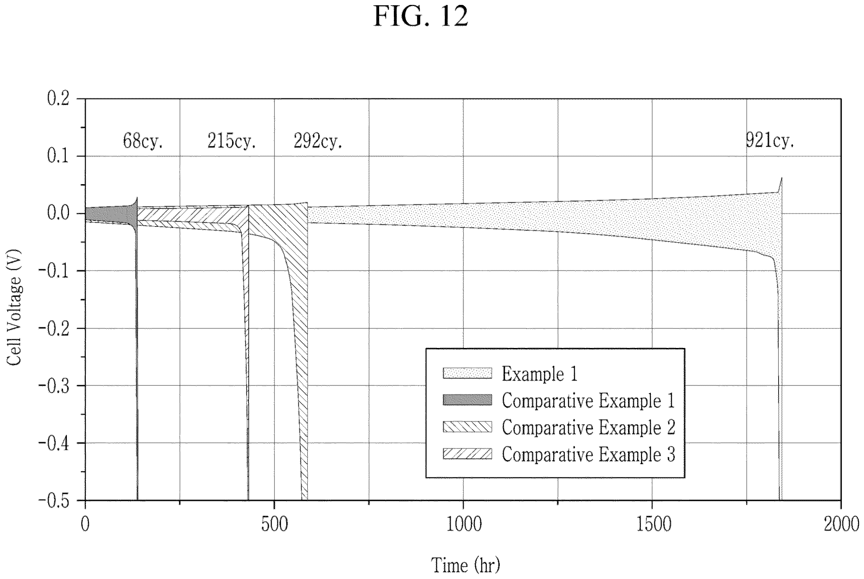

The results of evaluating the charge/discharge performance are shown in FIG. 12 and the following Table 2.

**(Table 2)**

| Classification | Charge/discharge life (times) |
|---|---|
| Example 1 | 921 |
| Comparative Example 1 | 68 |
| Comparative Example 2 | 292 |
| Comparative Example 3 | 220 |

Referring to FIG. 12 and Table 2, the charge/discharge life of the all-solid-state batteries to which the negative electrodes manufactured according to Comparative Examples 1 and 3 on which the metal layer was not formed between the current collector and the protective layer were applied was shown to be 68 times and 220 times, respectively, and the charge/discharge life of the all-solid-state batteries to which the negative electrodes manufactured according to Comparative Example 2 and Example 1 on which the metal layer was formed between the current collector and the protective layer were applied was shown to be 292 times and 921 times, respectively. That is, it was confirmed that the all-solid-state battery to which the negative electrode on which the metal layer was formed between the current collector and the protective layer was applied had significantly better charge/discharge life than the all-solid-state battery to which the negative electrode on which the metal layer was not formed between the current collector and the protective layer was applied.

Therefore, it was confirmed that when the negative electrode on which the metal layer was formed between the current collector and the protective layer was applied, the charge/discharge life of a secondary battery was significantly improved.

In addition, upon comparison of Comparative Example 2 and Example 1 in which the metal layer was formed between the current collector and the protective layer, the charge/discharge life of the all-solid-state battery to which the negative electrode manufactured according to Example 1, including the ceramic particles in the protective layer was applied was 921 times, which was significantly better than the charge/discharge life of the all-solid-state battery to which the negative electrode manufactured according to Comparative Example 2, including no ceramic particles in the protective layer was applied which was 292 times.

Likewise, upon comparison of Comparative Example 1 and Comparative Example 3 in which the metal layer was not formed between the current collector and the protective layer, the charge/discharge life of the all-solid-state battery to which the negative electrode manufactured according to Comparative Example 3 including the ceramic particles in the protective layer was applied was 220 times, which was significantly better than the charge/discharge life of the all-solid-state battery to which the negative electrode manufactured according to Comparative Example 1 including no ceramic particles in the protective layer was applied which was 68 times.

Therefore, it was confirmed that the charge/discharge life of the secondary battery including the ceramic particles in the protective layer was significantly improved.

Particularly, the charge/discharge life of the all-solid-state battery to which the negative electrode manufactured according to Example 1 in which the metal layer was formed between the current collector and the protective layer and the protective layer included the ceramic particles was applied was 921 times which was significantly better than the charge/discharge life of the all-solid-state batteries to which the negative electrodes manufactured according to Comparative Examples 1, 2, and 3 were applied.

Therefore, it was confirmed that when the negative electrode in which the metal layer was formed between the protective layer including the ceramic particles and the current collector was applied, the charge/discharge life of the secondary battery was able to be significantly improved.

### (Experimental Example 4-2)

When the lithium-ion conduction promoting protective layer was manufactured, the charge/discharge characteristics of the all-solid-state batteries to which the negative electrodes manufactured according to Examples 2, 3, and 4 and Reference Example 1 with varying weight ratios of the amorphous carbon and the lithium-ion conduction promoting ceramic particles were applied were evaluated, and are shown in FIG . 13 and the following Table 3.

**(Table 3)**

| Classification | Weight ratio of protective layer particles | | |
|---|---|---|---|
| | Amorphous carbon | lithium-ion conduction promoting ceramic particle | Charge/discharge life (times) |
| Comparative Example 2 | 100 | 0 | 292 |
| Example 2 | 98.5 | 1.5 | 473 |
| Example 3 | 97 | 3 | 809 |
| Example 1 | 70 | 30 | 921 |
| Example 4 | 50 | 50 | 654 |
| Reference Example 1 | 30 | 70 | 343 |

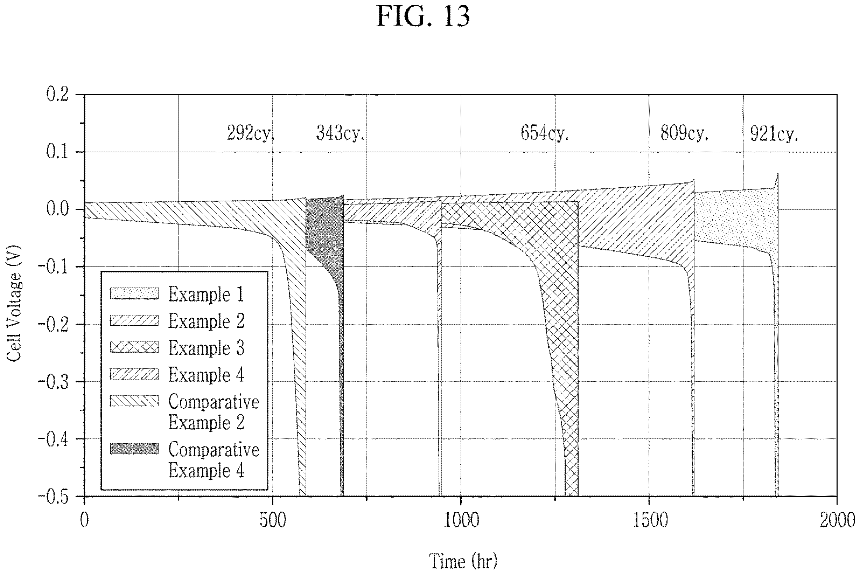

Referring to FIG. 13 and Table 3, as the amount of lithium-ion conduction promoting ceramic particles in the lithium-ion conduction promoting protective layer was increased, the charge/discharge life of the all-solid-state battery showed a trend of increasing and then decreasing again.

In the case in which a weight ratio between the lithium-ion conduction promoting ceramic particles and the amorphous carbon included in the lithium-ion conduction promoting protective layer was 70:30, it was shown that the battery had a shorter charge/discharge life than the all-solid-state battery including the protective layer formed of 100% amorphous carbon.

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

## Claims

1. A lithium metal electrode comprising:
a current collector;
a metal layer which is disposed on at least one surface of the current collector and includes a lithium alloy; and
a protective layer disposed on the metal layer;
wherein the protective layer includes amorphous carbon and lithium-ion conduction promoting ceramic particles.

2. The lithium metal electrode of claim 1, wherein:
the lithium-ion conduction promoting ceramic particles include one or more of Li₂TiO₃, LiNbOs, LiTaOs, LiZrOs, Li₄Ti₅O₁₂, Li₂CO₃, LisBOs, and SrTiOs.

3. The lithium metal electrode of claim 1, wherein:
the protective layer includes the amorphous carbon and the lithium-ion conduction promoting ceramic particles at a weight ratio of 99.5:0.5 to 40:60.

4. The lithium metal electrode of claim 1, wherein:
the metal layer including the lithium alloy
includes a lithium alloy layer disposed on the current collector and a lithium metal layer disposed on the lithium alloy layer.

5. The lithium metal electrode of claim 1, wherein:
the metal layer including the lithium alloy is a composite layer including lithium and a lithium alloy.

6. The lithium metal electrode of claim 1, wherein:
the metal layer including the lithium alloy is a composite layer including one or more of In, Ag, Sn, Zn, Si, Al, and Bi.

7. The lithium metal electrode of claim 1, wherein:
the metal layer has an average thickness of 1 µm to 100 µm.

8. The lithium metal electrode of claim 1, wherein:
the protective layer has an average thickness of 1 µm to 20 µm.

9. The lithium metal electrode of claim 1, wherein:
the protective layer
further includes a solid-electrolyte Interphase disposed on a surface of the protective layer, and
the solid-electrolyte Interphase includes one or more materials selected from the group consisting of a Li-N-C-H-O-based ionic compound, a Li-P-C-H-O-based ionic compound, LiF, and LisN.

10. A method of manufacturing a lithium metal electrode, the method comprising:
forming a coating layer on at least one surface of a current collector using a coating composition including a lithium-friendly component;
forming a protective layer on a surface of the coating layer using a slurry including amorphous carbon and lithium-ion conduction promoting ceramic particles;
disposing the current collector on which the coating layer and the protective layer are formed in a plating solution, and then disposing a lithium source at a predetermined distance from the protective layer; and
forming a metal layer including a lithium alloy in which the lithium-friendly component included in the coating layer and lithium precipitated from the lithium source are alloyed by applying current between the current collector and the lithium source.

11. The method of manufacturing a lithium metal electrode of claim 10, wherein:
in the forming of a coating layer,
the coating layer formed on at least one surface of the current collector has a thickness in a range of 0.001 µm to 10 µm range.

12. The method of manufacturing a lithium metal electrode of claim 10, wherein:
in the forming of a protective layer on a surface of the coating layer using a slurry including amorphous carbon and lithium-ion conduction promoting ceramic particles,
a weight ratio between the amorphous carbon and the lithium-ion conduction promoting ceramic particles is 99.5:0.5 to 40:60.

13. The method of manufacturing a lithium metal electrode of claim 10, wherein:
in the forming of a metal layer,
the metal layer is formed in a multilayer structure including:
a lithium alloy layer including the lithium alloy; and
a lithium metal layer formed on the lithium alloy layer.

14. The method of manufacturing a lithium metal electrode of claim 10, wherein:
in the forming of a metal layer,
the metal layer is formed in a single layer structure including:
the lithium alloy and a lithium metal precipitated from the lithium source.

15. The method of manufacturing a lithium metal electrode of claim 10, wherein:
in the forming of a metal layer including a lithium alloy,
the metal layer has a thickness of 1 µm to 100 µm.

16. A lithium secondary battery comprising:
a negative electrode;
a positive electrode; and
an electrolyte,
wherein the negative electrode is the lithium metal electrode of any one of claims 1 to 9.
